**Europäisches Patentamt**

(19) **European Patent Office**

**Office européen des brevets**

(11) Numéro de publication: **0 148 097**
**B1**

(12) # FASCICULE DE BREVET EUROPEEN

(45) Date de publication du fascicule du brevet:
**11.05.88**

(51) Int. Cl.⁴: **H 02 G 1/00,** B 29 D 7/00,
H 02 G 1/08

(21) Numéro de dépôt: **84450028.0**

(22) Date de dépôt: **29.11.84**

(54) **Dispositif pour la réalisation de galeries dans les cloisons composites.**

(30) Priorité: **30.11.83 FR 8319262**

(43) Date de publication de la demande:
**10.07.85 Bulletin 85/28**

(45) Mention de la délivrance du brevet:
**11.05.88 Bulletin 88/19**

(84) Etats contractants désignés:
**AT BE CH DE FR GB IT LI LU NL SE**

(56) Documents cités:
**EP - A - 0 041 604**
**DE - A - 2 538 588**
**DE - C - 516 557**
**DE - C - 575 357**
**US - A - 2 515 724**

(73) Titulaire: **Garcia, Michel, 2 place de l'Hôtel de Ville,
F-47800 Miramont de Guyenne (FR)**

(72) Inventeur: **Garcia, Michel, 2 place de l'Hôtel de Ville,
F-47800 Miramont de Guyenne (FR)**

(74) Mandataire: **Thébault, Jean-Louis, Cabinet Jean-Louis
Thébault 50, Cours de Verdun, F-33000 Bordeaux (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif permettant de creuser des galeries dans les cloisons composites consituées d'une épaisseur d'un matériau isolant, tel que du polystyrène ou du carton alvéolaire par exemple, recouvert, d'un côté ou des deux, d'une plaque rigide, et, plus précisément, un dispositif permettant de réaliser de telles galeries, en vue du passage de câbles ou gaines électriques in situ, c'est-à-dire une fois la cloison (de doublage ou de séparation) en place.

Ce type de paroi est réalisé et assemblé en usine et mis en place sur le chantier.

Lorsque des réservations doivent être pratiquées dans la masse, par exemple du polystyrène, pour permettre le passage de câbles ou gaines électriques, la plaque de polystyrène est alors entaillée et détériorée de façon importante avec, comme inconvénient majeur, la création de ponts thermiques entre ladite paroi et la plaque rigide en façade au droit des câbles, ou gaines électriques.

On connaît par ailleurs, par les documents DE-A-2 538 588 et EP-A-0 041 604, des outils chauffés pour la réalisation de cavités dans un bloc de mousse de matière plastique, mais ces outils, de par leur conception, sont totalement inaptes à la réalisation, dans l'épaisseur d'un matériau recouvert d'une plaque externe, de galeries parallèlement à cette dernière.

Le but de l'invention est précisément de pallier ces inconvénients en proposant un moyen propre à réaliser, dans la masse du polystyrène ou autre matériau isolant et après la pose de la cloison, le ou les passages nécessaires aux câbles ou gaines électriques.

A cet effet, l'invention a pour objet un dispositif pour la réalisation à l'aide d'un organe de perçage de galeries dans la masse d'un matériau isolant d'une cloison composite constituée d'une couche ou épaisseur dudit matériau recouverte, d'un et/ou l'autre côté, d'une plaque de façade rigide, caractérisé en ce qu'il comprend, d'une part, un ensemble mobile constitué dudit organe de perçage lequel est monté à l'extrémité d'un flexible et, d'autre part, un dispositif de positionnement et guidage dudit ensemble, constitué d'un support amovible comportant des moyens de fixation sur la plaque rigide de façade au droit d'un orifice de passage ménagé dans ladite plaque et un conduit de guidage coudé susceptible d'être introduit dans ledit orifice en vue de permettre la pénétration dans ledit matériau isolant, parallèlement à ladite plaque de façade, dudit organe de perçage avec son flexible dans la direction et sur la longueur désirées.

Suivant une application de l'invention au perçage de galeries dans un matériau isolant constitué par du polystyrène ou un matériau similaire, ledit organe de perçage est constitué par une panne chauffée électriquement et conformée de manière appropriée.

Avec un tel dispositif, en exerçant une poussée sur le flexible on fait progresser la panne chauffée dans la masse du polystyrène qui se sublime au contact avec la panne en sorte que cette dernière creuse en avançant une galerie dont la paroi se durcit et sert de guide au fur et à mesure de la progression de la panne.

On réalise ainsi une galerie parfaitement rectiligne, dans la direction voulue déterminée par le positionnement au départ du guide coudé et sur la longueur voulue puisqu'il suffit d'engager le flexible sur la longueur nécessaire.

Suivant une autre application de l'invention au perçage de galeries dans un matériau isolant constitué par du carton alvéolaire, ledit organe de perçage est constitué par une tête rigide pointue fixée à l'extrémité d'un feuillard formant ledit flexible. Dans cette variante le dispositif se met en place et s'utilise exactement de la même manière que dans le cas du polystyrène, avec cette différence que le matériau isolant n'est ni transformé ni éliminé mais percé de façon à permettre le passage de canalisations, câbles ou gaines divers.

D'autres caractéristiques et avantages ressortiront de la description qui va suivre de modes de réalisation du dispositif de l'invention, description donnée à titre d'exemple uniquement et en regard des dessins annexés sur lesquels:

figure 1 illustre schématiquement le dispositif selon l'invention prêt au creusement d'une galerie dans une plaque de doublage en polystyrène en place contre une paroi;

figure 2 représente une vue en coupe partielle axiale d'une panne avec son flexible de fixation et de propulsion;

figure 3 représente une vue en élévation latérale et en coupe des moyens de positionnement et de calage de la panne chauffante;

figure 4 représente une vue de gauche du dispositif de la figure 3;

figure 5 représente une vue de dessus du dispositif de la figure 3;

figure 6 représente le dispositif de la figure 3 en place au droit d'un orifice d'une plaque de façade d'une cloison de doublage;

figures 7 et 8 représentent respectivement en vue latérale et en vue de dessus, une forme perfectionnée de panne chauffante;

figure 9 représente en coupe verticale axiale un mode de réalisation du dispositif de l'invention destiné au perçage de galerie dans une cloison dont le matériau isolant est du carton alvéolaire, et

figure 10 est une vue de dessus de la tête de perçage du dispositif de la figure 9 et de l'extrémité du conduit de guidage du feuillard à l'extrémité duquel est fixée ladite tête.

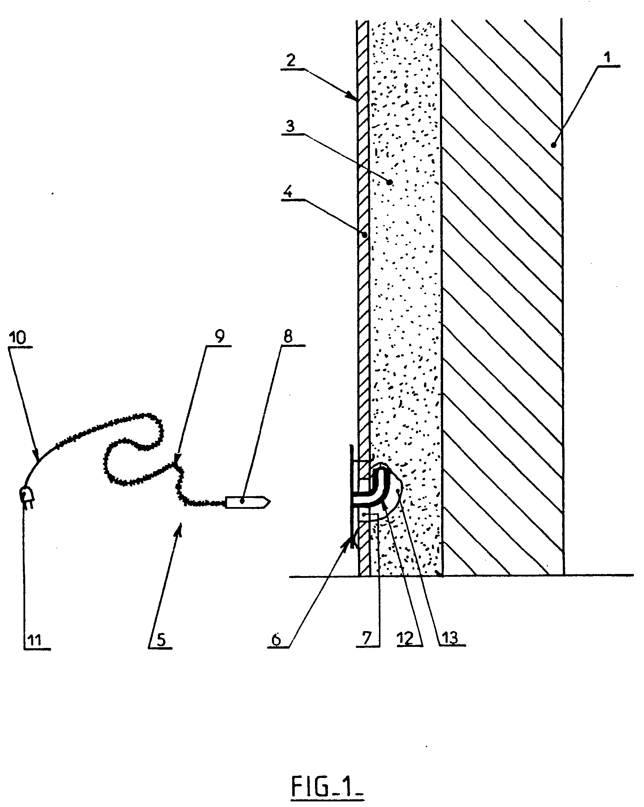

Sur la figure 1 on a représenté en coupe transversale un mur 1 revêtu sur l'une de ses parois d'une cloison de doublage 2 constituée, à la manière connue, d'une plaque 3 de polystyrène solidaire d'une plaque rigide 4 en façade formée par exemple du matériau connu sous la dénomination commerciale «placoplâtre».

L'ensemble 3-4 est fabriqué en usine et livré prêt à être monté.

Suivant la technique actuelle de montage, l'électricien qui doit installer des câbles et gaines électriques entre la cloison 2 et le mur 1 doit, avant la mise en place de la cloison 2, fixer les câbles et gaines sur le mur et entailler la totalité de l'épaisseur de la couche de polystyrène 3 au droit des trajets des câbles et gaines. Ce n'est qu'après la pose de la cloison 2 contre le mur qu'il peut reprendre ses travaux de connexions électriques aux extrémités des câbles et gaines pour installer les prises de courant, interrupteurs, etc...

Une telle manière de procéder oblige l'électricien à travailler en deux temps, c'est-à-dire en deux interventions, ce qui prend du temps et augmente les coûts d'installation. En outre, la mise en place de la cloison entraîne des difficultés de pose du fait des entailles et réserves à réaliser aux bons endroits dans la couche du polystyrène. Enfin, ces entailles pratiquées généralement sur toute l'épaisseur du polystyrène par facilité et rapidité d'exécution constituent autant de ponts thermiques entre le mur 1 et la plaque de façade 4 qui nuisent aux qualités d'isolation thermique de la cloison 2.

Le dispositif selon l'invention, schématiquement représenté sur la figure 1, pallie ces divers inconvénients en permettant à l'électricien de n'intervenir qu'après la pose de la cloison 2 contre le mur 1.

A cet effet, il est prévu, conformément à l'invention, d'une part, un dispositif 5 destiné à creuser une galerie dans la masse du polystyrène 3, c'est-à-dire entre la plaque de façade 4 et le mur 1, et, d'autre part, un dispositif 6 de positionnement et de guidage des moyens 5 au droit d'un orifice 7 pratiqué dans la plaque 4. Cet orifice se trouve par exemple à l'emplacement d'une prise de courant à installer et à raccorder électriquement au circuit de distribution par l'intermédiaire de câbles ou gaines, qu'il va s'agir de faire passer dans la plaque 3 de polystyrène.

Le dispositif 5 qui est l'ensemble actif comprend une panne 8 chauffée électriquement, de section circulaire et fixée à l'extrémité d'un flexible 9, les conducteurs électriques 10 d'alimentation de la panne 8 passant à l'intérieur du flexible 9 et étant munis d'une prise de courant 11.

Le dispositif 6 de positionnement-guidage au droit de l'orifice 7 est constitué par un support amovible muni de moyens de solidarisation avec la paroi de la plaque 4 et d'un coude 12 de guidage de la panne 8 et de son flexible, le coude étant engagé au travers de l'orifice 7 dans un évidement 13 réalisé dans la plaque de polystyrène.

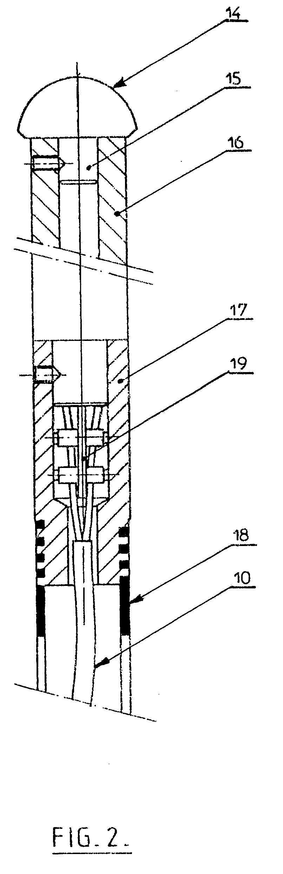

La figure 2 représente un mode de réalisation de l'ensemble 5.

La panne est constituée par une tête 14 sensiblement hémisphérique munie d'un ergot 15 de centrage et fixation de la tête à l'extrémité d'un manchon cylindrique en acier 16. La tête 14 est montée amovible sur le manchon 16. Ce dernier est monté également amovible à l'extrémité d'un fourreau cylindrique 17 en matière plastique isolante et réfractaire, lui-même monté dans l'axe d'un flexible métallique 18.

Le flexible 18 est formé d'un fil d'acier à ressort, par exemple de section carrée, enroulé en hélice à spires jointives dont le diamètre extérieur est sensiblement égal à celui du fourreau 17 du manchon de blindage 16.

Le flexible 18 est par exemple fixé au fourreau 17 par enroulement des dernières spires dans un filetage approprié réalisé dans le fourreau.

Les résistances de chauffage de la panne 14 sont logées dans le manchon 16 et connectées par l'intermédiaire d'une plaquette de raccordement 19 logée dans le fourreau 17 aux conducteurs 10 s'étendant à l'intérieur du flexible 18 sur toute sa longueur.

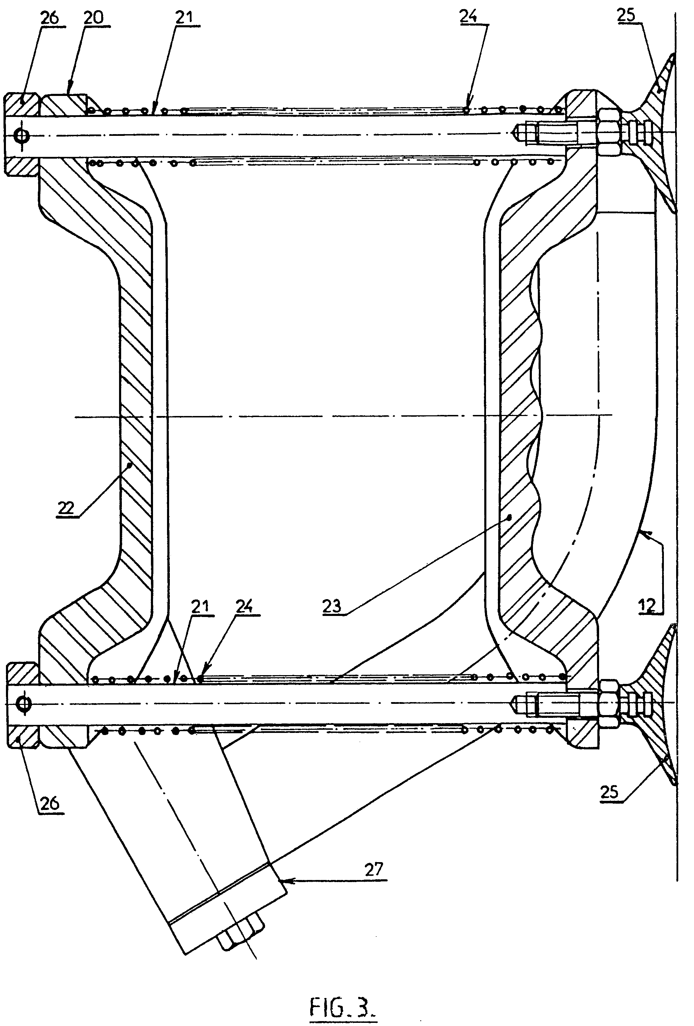

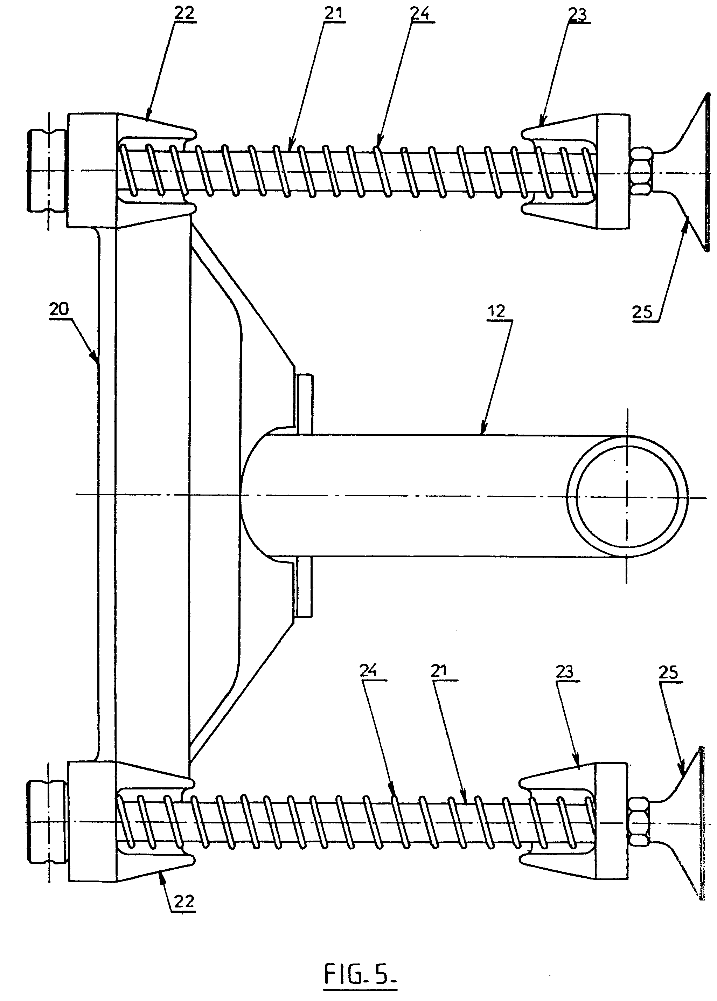

On a représenté en détail sur les figures 3 à 6 un mode de réalisation du dispositif 6 de positionnement et de guidage du dispositif de la figure 2.

Ce dispositif est constitué d'un cadre rectangulaire 20 monté coulissant sur quatre tubes-guides 21 parallèles.

Deux des côtés opposés du cadre forment deux demi-poignées 22 coopérant avec deux demi-poignées antagonistes 23 fixées à une extrémité des tubes-guides 21.

Des ressorts 24 sont engagés sur les tubes-guides entre les demi-poignées 22, 23.

Aux extrémités des tubes-guides 21 sont fixées, côté demi-poignées fixes 23, des ventouses 25 pour assurer la fixation du dispositif contre la façade lisse de la plaque 4.

Les demi-poignées 22 sont retenues sur les tubes-guides 21 par des butées 26.

Le cadre 20 porte un système de serrage 27 du conduit-guide coudé 12 dont le diamètre interne est légèrement supérieur au diamètre externe de l'ensemble manchon 16 – fourreau 17.

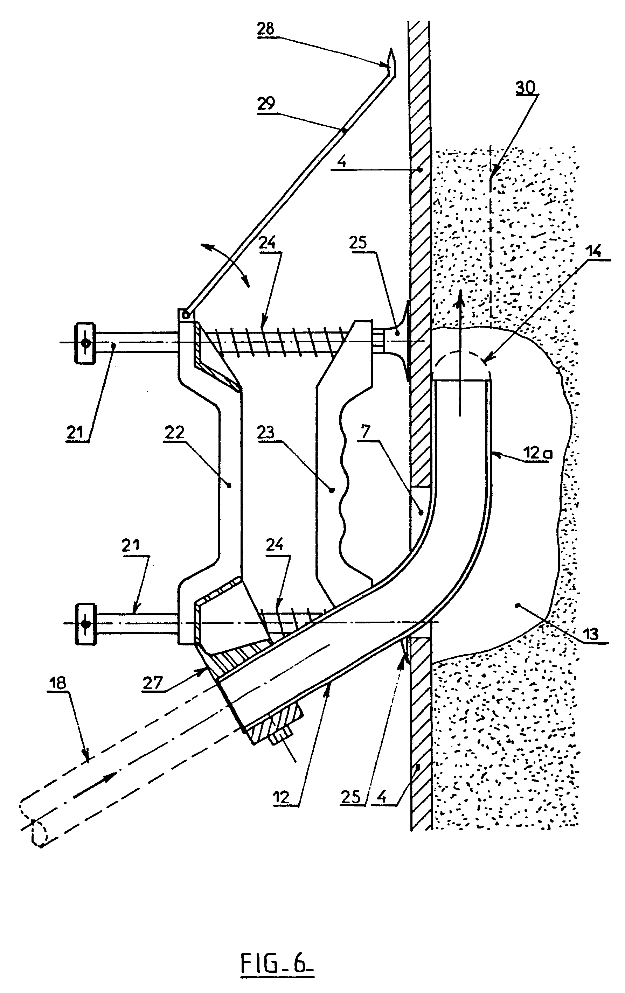

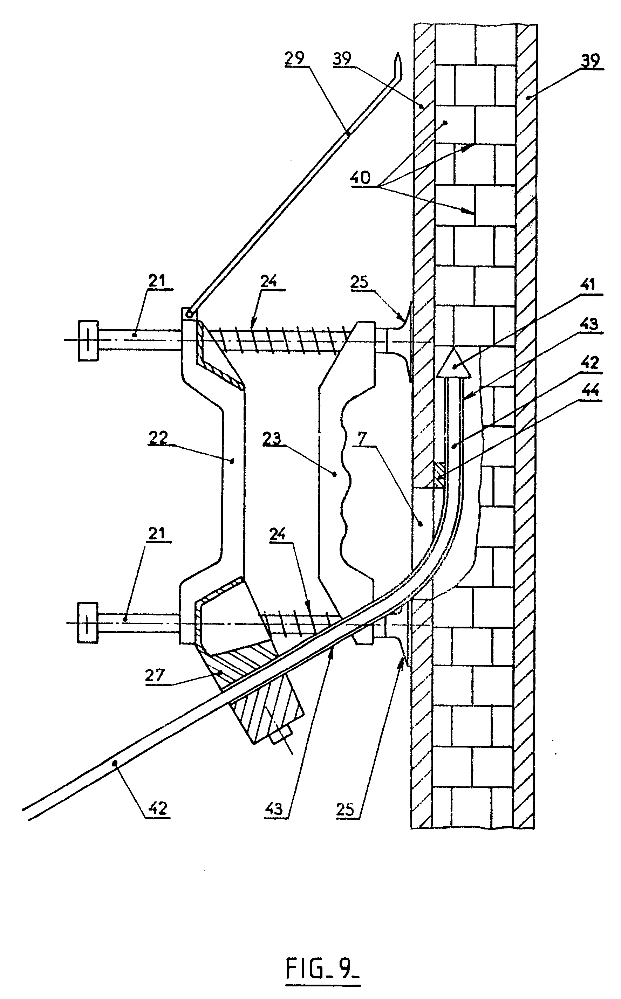

Sur la figure 6 on a représenté en tiretés la tête 14 de la panne de la figure 2 et le flexible 18.

Le guide coudé 12 se termine au droit du système de fixation 27.

Le fonctionnement du dispositif représenté et décrit ci-dessus est le suivant.

La panne 14 et le flexible 18 étant au préalable engagés dans le coude 12 comme représenté sur la figure 6, le dispositif de positionnement est saisi par les demi-poignées 22-23 à l'aide des deux mains. Les demi-poignées 22-23 sont rapprochées au maximum l'une de l'autre pour éloigner l'extrémité du coude 12 du plan délimité par les ventouses 25 afin de permettre l'engagement de l'extrémité du coude portant la panne 14 à travers l'orifice 7 (figure 6) de la plaque 4 dans l'évidement 13 réalisé au préalable dans la masse de polystyrène.

Les demi-poignées 22-23 sont alors relâchées de façon que la paroi 4 soit prise en sandwich, comme illustré par la figure 6, entre les quatre ventouses 25, disposées autour de l'orifice 7 et la partie 12a du coude 12 parallèle au plan des ventouses.

Bien entendu la partie 12a est orientée dans la direction dans laquelle on veut réaliser dans le polystyrène la galerie destinée au passage des câbles ou gaines.

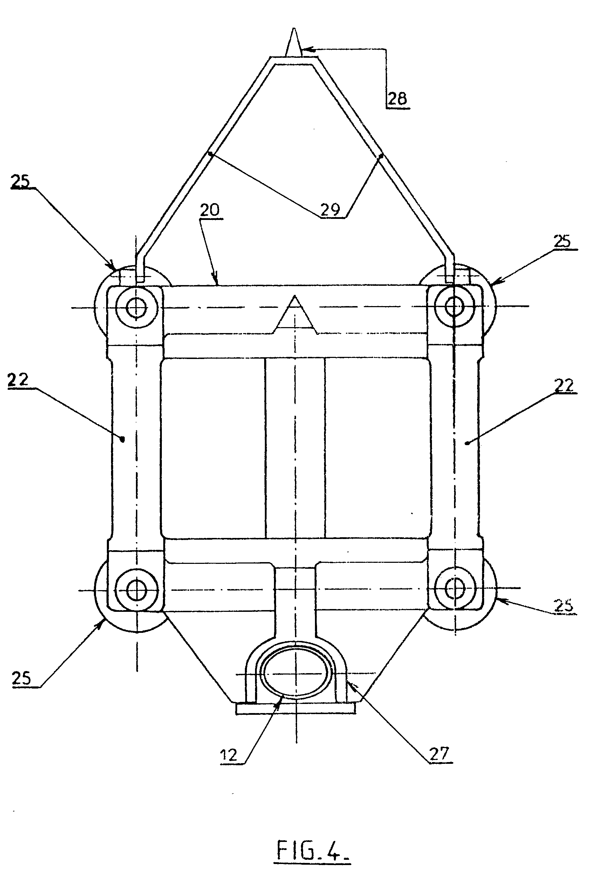

Pour faciliter cette orientation le dispositif est avantageusement muni d'un viseur de direction constitué, par exemple comme représenté sur les figures 4 et 6, d'un index de guidage 28 fixé à l'extrémité de tiges 29 articulées sur les demi-poignées 22 de façon à pouvoir rapprocher ou éloigner à volonté l'index 28 de la paroi 4. Cet index peut ainsi être positionné exactement au droit d'un trait préalablement tracé sur la paroi 4 et matérialisant l'axe de la galerie à réaliser.

Il suffit ensuite de pousser le flexible 18 semi-rigide à l'intérieur du guide 12 pour amener la panne 14, préalablement branchée sur une prise de courant, au contact avec le polystyrène qui se sublime. On réalise ainsi, au fur et à mesure que l'on pousse sur le flexible 18, une galerie 30 de section circulaire de diamètre correspondant sensiblement à celui de la panne 14.

Les parois de cette galerie 30 durcissent immédiatement après le passage de la tête chauffante et forment un conduit de guidage dans le prolongement exact de la partie 12a en sorte que la galerie est rigoureusement rectiligne et demeure en contact avec la face interne de la plaque 4.

Il est facile de donner à cette galerie la longueur que l'on veut, laquelle correspond à la longueur de flexible introduite dans le guide coudé 12.

Pour enlever le dispositif il suffit de tirer sur le flexible 18 jusqu'à ce que l'épaulement de la tête 14 vienne en butée sur l'extrémité du coude 12, puis, par une manoeuvre inverse, de retirer le cadre 20 avec son guide 12 et son ensemble 14, 18.

La réalisation d'une telle galerie 30 est extrêmement rapide, nette et ne provoque aucun pontage thermique entre la paroi 4 et le mur 1 car la galerie demeure constamment à une distance notable de la paroi du mur 1.

Des galeries de diamètres différents peuvent être réalisées en changeant la tête 14 et éventuellement le conduit coudé 12.

Il est très facile à l'électricien de faire passer ses câbles ou gaines dans les galeries ainsi réalisées entre deux points déterminés de la cloison de doublage 2.

Le flexible 18 qui présente à la fois la flexibilité et la rigidité nécessaires peut être réalisé en plusiuers tronçons distincts pouvant être mis bout à bout à des fins de facilité de manipulation, des moyens étant alors évidemment prévus pour assurer les connexions électriques nécessaires pour la panne chauffante.

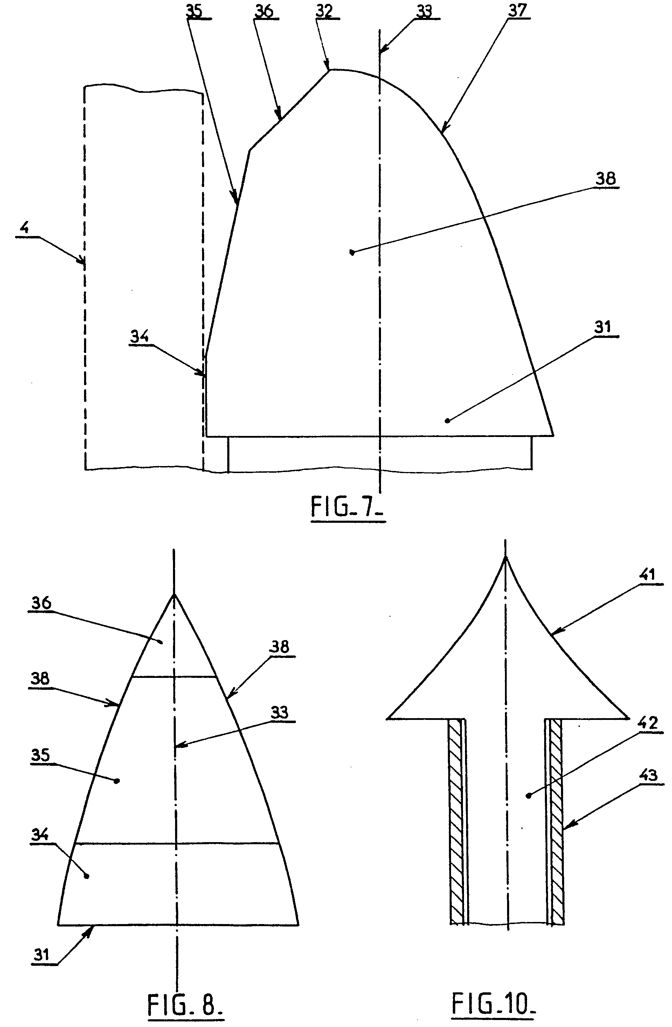

Les figures 7 et 8 illustrent une variante de réalisation de la panne chauffante destinée à assurer en toutes circonstances le perçage de galeries au contact immédiat de la face interne de la plaque de façade 4.

A cet effet, la panne 31 représentée sur la figure 7 est, en vue latérale, dissymétrique en ce sens que le nez 32 est nettement décalé par rapport à l'axe 33 de la tête en direction de la plaque 4.

En vue de dessus (figure 8) la panne 31 a une forme d'ogive relativement effilée.

La face de la panne 31 tournée vers la plaque 4 comporte une première partie plane 34 parallèle à l'axe 33, au droit de la section de la tête la plus large, suivie d'une seconde face plane 35 inclinée entre 15 et 20° environ par rapport à la plaque 4, puis d'une troisième face plane sensiblement triangulaire 36 se terminant au nez 32 et inclinée d'environ 45° par rapport à la plaque 4. La face 37 de la tête 31 opposée à la plaque 4 et les flancs latéraux 38 sont incurvés à la manière d'une carène de navire.

Cette forme particulière de la tête 31 contraint celle-ci, tout au long de sa progression dans le polystyrène, à se plaquer constamment contre la plaque 4.

L'invention s'applique bien entendu à des cloisons de séparation comportant une plaque 4 de part et d'autre du polystyrène, ainsi qu'à toute cloison utilisant une matière isolante interne sublimable autre que le polystyrène ou susceptible d'être percée.

Les figures 9 et 10 illustrent une application de l'invention à une cloison dont la matière isolante interne est du carton alvéolaire. Ce type de cloison représenté sur la figure 9 est bien connu et comprend deux plaques de façade rigides 39 entre lesquelles s'étendent des feuilles de carton symbolisées en 40 et disposées perpendiculairement les unes les autres à distance de manière à former des alvéoles cubiques remplie d'air entre les plaques 39.

Ce type de cloison est par exemple fabriqué par la Société Française PREGYPAN et vendue sous la dénomination commerciale PLACOPAN.

Pour cette application particulière le dispositif selon l'invention est identique à celui décrit ci-dessus excepté en ce qui concerne l'organe de perçage et son flexible de propulsion. Sur la figure 9 les organes homologues de ceux du dispositif de la figure 6 portent les mêmes références numériques.

L'organe de perçage est constitué d'une tête rigide pointue 41 en forme de toit rectangulaire à quatre pentes droites ou inclinées (figures 9 et 10). La tête 41 est fixée à l'extrémité d'un feuillard métallique ou analogue 42 de section rectangulaire constituant ledit flexible de propulsion et canalisé par un guide tubulaire 43 de section rectangulaire analogue au conduit-guide 12 de la figure 6.

Du fait du débordement de la tête 41 par rapport au contour extérieur du conduit-guide 43, ce dernier est muni, sur sa face parallèle aux poignées 22, 23 et tournée vers la plaque 39 adjacente (figure 9) d'une cale plate 44 d'éloignement et de maintien de l'axe du conduit-guide 43 à une distance suffisante de la face interne de ladite plaque 39.

Enfin, l'invention n'est évidemment pas limitée aux modes de réalisation représentés et décrits ci-dessus mais en couvre au contraire toutes les variantes notamment en ce qui concerne les moyens de positionnement du coude de guidage 12, 43, la structure du flexible 18, 42 de fixation et propulsion de l'organe de perçage 14, 31, 41, ainsi que les formes, agencements et nature de ce dernier.

**Revendications**

1. Dispositif pour la réalisation, à l'aide d'un organe de perçage (14, 41), de galeries (30), dans la masse d'un matériau isolant d'une cloison composite constituée d'une couche ou épaisseur dudit matériau recouverte, d'un et/ou de l'autre côté, d'une plaque rigide de façade (4, 39), caractérisé en ce qu'il comprend, d'une part, un ensemble mobile constitué dudit organe de perçage (14, 41) lequel est monté à l'extrémité d'un flexible (18, 42) et, d'autre part, un dispositif de positionnement et guidage dudit ensemble, constitué d'un support amovible (6) comportant des moyens de fixation sur la plaque rigide de façade (4, 39), au droit d'un orifice de passage (7) ménagé dans ladite plaque et un conduit de guidage coudé (12, 43) susceptible d'être introduit dans ledit orifice (7) en vue de permettre la pénétration dans ledit matériau isolant, parallèlement à ladite plaque de façade (4, 39), dudit organe de perçage avec son flexible (18, 42) dans la direction et sur la longueur désirées.

2. Dispositif suivant la revendication 1 plus particulièrement appliqué au perçage de galeries (30) dans un matériau plastique sublimable (3) tel que le polystyrène, caractérisé en ce que ledit organe de perçage est une panne (14) chauffée électriquement.

3. Dispositif suivant les revendications 1 et 2, caractérisé en ce que ledit flexible (18) est constitué par un ressort hélicoïdal à spires jointives.

4. Dispositif suivant la revendication 3, caractérisé en ce que l'extrémité du ressort hélicoïdal (18) est fixée à un fourreau (17) servant de logement et une plaquette (19) de raccordement électrique et lui-même fixé à un manchon (16) entourant les résistances de chauffage d'une panne (14) montée amovible à l'extrémité dudit manchon (16), les conducteurs électriques (10) d'alimentation des résistances courant à l'intérieur dudit ressort hélicoïdal (18).

5. Dispositif suivant l'une des revendications 2 à 4, caractérisé en ce que la panne (31) a une forme de proue de bateau avec une partie à facettes planes inclinées (34, 35, 36) tournées vers la face interne de la plaque (4, 39) à loger et une partie (37, 38) opposée à ladite plaque en forme de carène.

6. Dispositif suivant la revendication 1 plus particulièrement appliqué au perçage de galeries (30) dans un matériau isolant constitué par du carton alvéolaire (40), caractérisé en ce que ledit organe de perçage est une tête effilée (41) fixée à l'extrémité d'une tige rigide mais flexible (42).

7. Dispositif suivant la revendication 6, caractérisé en ce que ladite tête de perçage (41) a une forme de toit à quatre pentes et est fixée à l'extrémité d'un feuillard métallique (42) guidé par un conduit de guidage de section rectangulaire appropriée (43).

8. Dispositif suivant l'une des revendications 1 à 7, caractérisé en ce que lesdits moyens de positionnement et guidage sont constitués par un cadre (20) rectangulaire monté coulissant sur quatre tubes-guides (21) munis à leurs extrémités de ventouses (25) de fixation sur la façade de ladite plaque rigide (4), ledit cadre portant ledit conduit de guidage coudé (12, 43), un système de poignées (22, 23) montées sur lesdits tubes-guides (21) et munies de ressorts de rappel (24) assurant l'éloignement et le rapprochement mutuel de l'extrémité du conduit de guidage (12, 43) et des ventouses en vue de positionner le conduit de guidage par serrage en sandwich de la plaque de façade (4) entre lesdites ventouses (25) et ladite extrémité du conduit de guidage.

9. Dispositif suivant la revendication 8, caractérisé en ce que lesdits moyens de positionnement et guidage comportent un index de direction (28) fixé sur un support (29) articulé sur ledit cadre (20).

## Patentansprüche

1. Vorrichtung zur Realisierung von Gängen (30) in der Masse eines Isoliermaterials einer Verbundwand gebildet mit einer Schicht oder einer Dicke des besagten Materials, das auf einer und/oder beiden Seiten von einer starren Frontplatte (4, 39) bedeckt ist, unter Zuhilfenahme eines Bohrorgans (14, 41), dadurch gekennzeichnet, dass sie einerseits eine mobile Einheit, die aus dem besagten Bohrorgan (14, 41), das am Ende einer biegsamen Welle (18, 42) montiert ist, gebildet wird, und andererseits eine Positionier- und Führungseinrichtung für die besagte Einheit umfasst, die aus einem abnehmbaren Träger (6), der Mittel zum Befestigen auf der starren Frontplatte (4, 39) an der Stelle einer Durchtrittsöffnung (7) umfasst, die in der besagten Platte angebracht ist, und einer gebogenen Führungsleitung (12, 43) gebildet wird, die geeignet ist, in die besagte Öffnung (7) eingeführt zu werden, um das Eindringen in das besagte Isoliermaterial parallel zu der besagten Frontplatte (4, 39) durch das besagte Bohrorgan mit seiner biegsamen Welle (18, 42) in der gewünschten Richtung und auf der gewünschten Länge zu ermöglichen.

2. Vorrichtung nach Anspruch 1, insbesondere angewendet auf das Bohren von Gängen (30) in einem sublimierbaren Plastikmaterial (3) wie Polystyrol, dadurch gekennzeichnet, dass das besagte Bohrorgan eine elektrisch beheizte Finne (14) ist.

3. Vorrichtung nach den Ansprüchen 1 und 2, dadurch gekennzeichnet, dass die besagte biegsame Welle (18) aus einer Schraubenfeder mit aneinanderstossenden Windungen gebildet wird.

4. Vorrichtung nach Anspruch 3, dadurch gekennzeichnet, dass das Ende der Schraubenfeder (18) an einer Hülse (17) befestigt ist, die als Sitz für eine elektrische Verbindungsplatte (19) dient und selbst an einer Buchse (16) befestigt ist, die die Heizwiderstände einer Finne (14) umgibt, die lösbar am Ende der besagten Hülse (16) montiert ist, wobei die elektrischen Zuleitungen (10) zur Versorgung der Widerstände im Inneren der besagten Schraubenfeder (18) verlaufen.

5. Vorrichtung nach einem der Ansprüche 2 bis 4, dadurch gekennzeichnet, dass die Finne (31) die Form eines Schiffsbugs mit einem Abschnitt mit geneigten Facettenebenen (34, 35, 36), die zur Innenseite der entlangzufahrenden Platte (4, 39) gerichtet sind, und einen Abschnitt (37, 38) in Form eines Schiffsbodens aufweist, der der besagten Platte gegenüberliegt.

6. Vorrichtung nach Anspruch 1, insbesondere angewendet auf das Bohren von Gängen (30) in einem Isoliermaterial aus zellenförmigem Karton, dadurch gekennzeichnet, dass das besagte Bohrorgan ein zugespitzter Kopf (41) ist, der am Ende eines steifen, aber flexiblen Schaftes (42) befestigt ist.

7. Vorrichtung nach Anspruch 6, dadurch gekennzeichnet, dass der besagte Bohrkopf (41) eine Dachform mit vier Neigungsflächen besitzt und am Ende eines Metallbands (42) befestigt ist, das durch eine Führungsleitung (43) mit geeignetem rechteckigem Querschnitt geführt ist.

8. Vorrichtung nach einem der Ansprüche 1 bis 7, dadurch gekennzeichnet, dass die besagten Mittel zum Positionieren und Führen durch einen rechteckigen Rahmen (20) gebildet werden, der auf vier Rohrführungen (21) verschiebbar montiert ist, die an ihren Enden mit Saugnäpfen (25) zur Befestigung auf der Aussenseite der besagten starren Platte (4) versehen sind, wobei der besagte Rahmen die besagte gekrümmte Führungsleitung (12, 43) trägt und ein System von Griffen (22, 23) auf den besagten Rohrführungen (21) montiert und mit Rückstellfedern (24) versehen sind, die das gegenseitige Entfernen und Nähern des Endes der Führungsleitung (12, 43) und der Saugnäpfe zum Positionieren der Führungsleitung durch sandwichartiges Klemmen der Frontplatte (4) zwischen den besagten Saugnäpfen (25) und dem besagten Ende der Führungsleitung sicherstellen.

9. Vorrichtung nach Anspruch 8, dadurch gekennzeichnet, dass die besagten Mittel zum Positionieren und Führen eine Richtungsanzeige (28) umfassen, die auf dem Träger (29) befestigt ist, der an dem besagten Rahmen (20) angelenkt ist.

**Claims**

1. An apparatus for forming bores (30), by means of a boring device (14, 41), in the mass of the insulating material of a composite partition consisting of a layer or thickness of said material covered, at one side and/or the other, with a rigid facing slab (4, 39), characterized in that it comprises, on the one hand a mobile unit consisting of said boring device (14, 41) which is mounted at the end of a flexible shaft (18, 42) and, on the other hand, a device for positioning and guiding said unit, consisting of a removable support (6) comprising means for fixing to the rigid facing slab (4, 39) at right angles to a passage (7) formed in said slab and an elbowed guide conduit (12, 43) adapted to be introduced into said passage (7) with a view to permitting the penetration into said insulating material, parallel to said facing slab (4, 39) of said boring device with its flexible shaft (18, 42), in the desired direction and over the desired length.

2. An apparatus according to Claim 1, applied more particularly to the boring of bores (30) in a sublimable plastics material (3) such as polystyrene, characterized in that said boring device is an electrically heated peen (14).

3. An apparatus according to Claims 1 and 2, characterized in that said flexible shaft (18) consists of a helical spring with contiguous turns.

4. An apparatus according to Claim 3, characterized in that the end of the helical spring (18) is fixed to a sleeve (17) serving as a housing for an electrical terminal board (19) and itself fixed to a sleeve (16) surrounding the heating resistors of a peen (14) detachably mounted at the end of said sleeve (16), the electrical conductors (10) for feeding the resistors extending inside said helical spring (18).

5. An apparatus according to any one of Claims 2 to 4, characterized in that the peen (31) has the shape of a ship's prow with a portion having inclined plane facets (34, 35, 36) turned towards the internal face of the slab (4, 39) to be skirted and a hull-shaped portion (37, 38) opposite to said slab.

6. An apparatus according to Claim 1 applied more particularly to boring bores (30) in an insulating material consisting of cellular cardboard (40), characterized in that said boring device is a pointed head (41) fixed to the end of a rigid but flexible rod (42).

7. An apparatus according to Claim 6, characterized in that said boring head (41) has the shape of a roof with four slopes and is fixed to the end of a metal strip (42) guided by a guide conduit of appropriate rectangular cross-section (43).

8. An apparatus according to any one of Claims 1 to 7, characterized in that said positioning and guide means consist of a rectangular frame (20) mounted for sliding on four guide tubes (21) equipped at their ends with suction cups (25) for fixing to the face of said rigid slab (4), said frame carrying said elbowed guide conduit (12, 43), a system of grips (22, 23) mounted on said guide tubes (21) and equipped with return springs (24) ensuring the mutual movement of the end of the guide conduit (12, 43) and of the suction cups away from and towards one another with a view to positioning the guide conduit by clamping the facing slab (4) sandwiched between said suction cups (25) and said end of the guide conduit.

9. An apparatus according to Claim 8, characterized in that said positioning and guide means comprise a direction indicator (28) fixed to a support (29) articulated on said frame (20).

FIG_1_

FIG. 2.

FIG. 3.

FIG.4.

FIG. 5.

FIG. 6

0 148 097

FIG. 9

19

0 148 097

FIG. 7.

FIG. 8.

FIG. 10.

21